# EUROPEAN PATENT APPLICATION

(11) **EP 4 503 241 A1**
(43) Date of publication of application: **05.02.2025**
(21) Application number: 23779949.9
(22) Date of filing: 22.03.2023
(51) Int. Cl.: H01M 10/0587, H01M 10/052

(54) **NON-AQUEOUS ELECTROLYTE SECONDARY BATTERY**

(30) Priority: 30.03.2022 JP 2022054940
(71) Applicant: Panasonic Energy Co., Ltd., Osaka 570-8511 (JP)
(72) Inventor: MIZUKOSHI, Fumikazu, Osaka 571-0057 (JP); MIZAWA, Atsushi, Osaka 571-0057 (JP); NAMBUYA, Arisa, Osaka 571-0057 (JP)
(74) Representative: Eisenführ Speiser
(86) International application number: PCT/JP2023/011215
(87) International publication number: WO 2023/189937

(57) **Abstract**

A non-aqueous electrolyte secondary battery (10) includes: a wound electrode body (14) in which a band-shaped positive electrode plate (11) and a band-shaped negative electrode plate (12) are wound with a separator (13) interposed therebetween; and an outer package can (15) containing the electrode body (14). With a first inter-positive electrode plate gap between a first lap portion of the first lap and a second lap portion of the second lap from a winding-start end (11a) of the positive electrode plate (11) toward the winding-end side represented by L1, a second inter-positive electrode plate gap between the second lap portion and a third lap portion of the third lap represented by L2, and a third inter-positive plate gap between the third lap portion and a fourth lap portion of the fourth lap represented by L3, the gaps L1, L2, and L3 satisfy the relationship L1>L2≥L3.

## Description

### TECHNICAL FIELD

The present disclosure relates to a non-aqueous electrolyte secondary battery.

### BACKGROUND

Conventionally, there has been known a non-aqueous electrolyte secondary battery including: an electrode assembly where a positive electrode plate and a negative electrode plate are wound with a separator interposed therebetween; and an outer housing can that houses the electrode assembly and an electrolytic solution. Recently, high input and output is required for the secondary battery used for an electric vehicle or the like. To that end, in the non-aqueous electrolyte secondary battery, a pressure applied to the electrode plate increases due to an increase in Si content in the electrode plate or an increase in the number of winding turns caused by an increase in diameter.

Patent Literature 1 describes a cylindrical battery including a wound electrode group, in which in order to prevent occurrence of buckling of a central portion, a spacer having a predetermined dimension is interposed in at least a part between two adjacent turn portions for winding in a winding step, and the spacer is removed after the end of the winding step.

### CITATION LIST

### PATENT LITERATURE

Patent Literature 1: JP2003-338307A

### SUMMARY

Due to the above-described increase in pressure, the electrode assembly is deformed along with charging/discharging of the secondary battery, and particularly, the electrode plate is likely to be buckled in the vicinity of a winding-start end of the electrode assembly. In the configuration of Patent Literature 1, there is room for improvement from the viewpoint of suppressing buckling in the electrode plate in the vicinity of the winding-start end of the electrode assembly.

An object of the present disclosure is to suppress buckling of an electrode plate in the vicinity of a winding-start end of an electrode assembly in a non-aqueous electrolyte secondary battery.

A non-aqueous electrolyte secondary battery according to the present disclosure includes: a wound electrode assembly where a band-shaped positive electrode plate and a band-shaped negative electrode plate are wound with a separator interposed between the positive electrode plate and the negative electrode plate; and a cylindrical outer housing can that houses the electrode assembly, in which when a first positive electrode plate clearance between a first turn portion of a first turn and a second turn portion of a second turn from a winding-start end of the positive electrode plate toward a winding-end side is represented by L1, a second positive electrode plate clearance between the second turn portion and a third turn portion of a third turn is represented by L2, and a third positive electrode plate clearance between the third turn portion and a fourth turn portion of a fourth turn is represented by L3, the L1, L2, and L3 satisfy a relationship of L1 > L2 ≥ L3.

In the non-aqueous electrolyte secondary battery according to the present disclosure, buckling of an electrode plate in the vicinity of a winding-start end of an electrode assembly can be suppressed.

### BRIEF DESCRIPTION OF DRAWINGS

FIG. 1 is a cross-sectional view taken along an axial direction of a non-aqueous electrolyte secondary battery according to an example of an embodiment where the number of winding turns of an electrode assembly is reduced.
FIG. 2 is a diagram illustrating a cross-section perpendicular to the axial direction of the non-aqueous electrolyte secondary battery according to the example of the embodiment, in which a part of the cross-section is not illustrated.
FIG. 3 is a schematic diagram illustrating the cross-section perpendicular to the axial direction of the battery in a state where buckling does not occur in the electrode plate.
FIG. 4 is a schematic diagram illustrating the cross-section perpendicular to the axial direction of the battery in a state where buckling occurs in the vicinity of a winding-start end of the electrode assembly.
FIG. 5 is a conceptual diagram illustrating a relationship between an electrode plate clearance of a positive electrode plate and the number of winding turns from the winding-start end in Example 1.

### DESCRIPTION OF EMBODIMENTS

Hereinafter, embodiments according to the present invention will be described in detail with reference to the accompanying drawings. In the following description, specific shapes, materials, numerical values, directions, and the like are merely examples for easy understanding of the present invention, and can appropriately change depending on the specification of a non-aqueous electrolyte secondary battery. In addition, hereinafter, the term "substantially" is used in senses including not only a case where somethings are completely the same but also a case where somethings are substantially the same. Further, it is assumed from the beginning that, when the following description includes a plurality of embodiments and modification examples, characteristic portions thereof are appropriately combined and used.

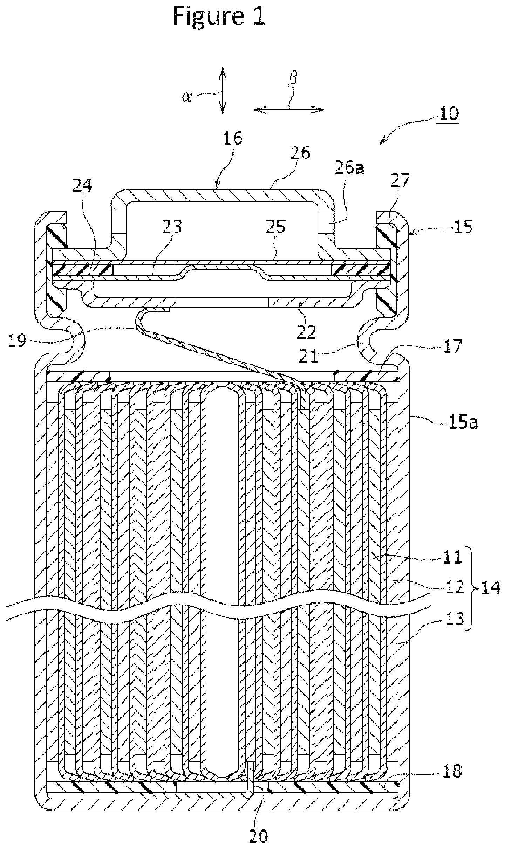

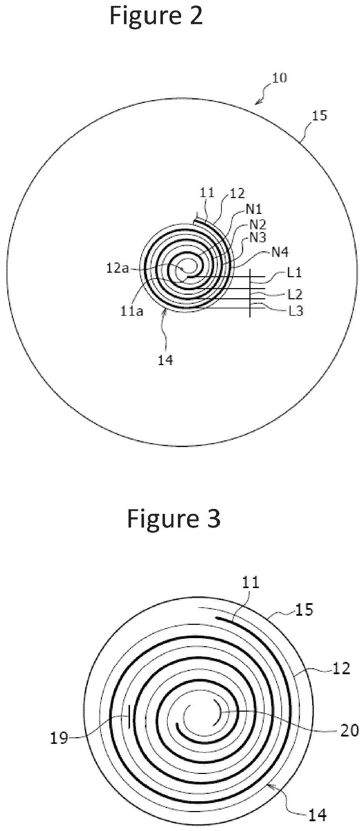

FIG. 1 is a cross-sectional view taken along an axial direction of a non-aqueous electrolyte secondary battery 10 according to an embodiment where the number of winding turns of an electrode assembly is reduced. FIG. 2 is a diagram illustrating a cross-section perpendicular to the axial direction of the non-aqueous electrolyte secondary battery 10, in which a part of the cross-section is not illustrated. As illustrated in FIGS. 1 and 2, the non-aqueous electrolyte secondary battery 10 includes a wound electrode assembly 14, a non-aqueous electrolyte (not illustrated), an outer housing can 15, and a sealing assembly 16. The wound electrode assembly 14 includes a positive electrode plate 11, the negative electrode plate 12, and a separator 13, in which the positive electrode plate 11 and the negative electrode plate 12 are spirally wound with the separator 13 interposed therebetween. In FIG. 2, the separator 13 is not illustrated. Hereinafter, one side in the axial direction of the electrode assembly 14 will also be referred to as "upper", and another side in the axial direction will also be referred to as "lower". The non-aqueous electrolyte includes a non-aqueous solvent and an electrolyte salt dissolved in the non-aqueous solvent. The non-aqueous electrolyte is not limited to a liquid electrolyte, and may be a solid electrolyte in which a gel polymer or the like is used.

As illustrated in FIG. 1, the positive electrode plate 11 includes a band-shaped positive electrode core and a positive electrode tab 19 that is joined to the positive electrode core. The positive electrode tab 19 is a conductive member for electrically connecting the positive electrode plate 11 to a positive electrode terminal, and extends from an upper end of the positive electrode core in the electrode assembly 14 toward one side (upper side) in an axial direction α. It is preferable that the positive electrode tab 19 is formed of a metal including aluminum as a major component. In the positive electrode plate 11, a positive electrode mixture layer is formed on each of a winding inner surface (inner surface in a radial direction) and a winding outer surface (outer surface in the radial direction) of the positive electrode core.

The negative electrode plate 12 includes a band-shaped negative electrode core and a negative electrode tab 20 that is joined to the negative electrode core. The negative electrode tab 20 is a conductive member for electrically connecting the negative electrode plate 12 and the outer housing can 15, and extends from a lower end of the negative electrode core in the electrode assembly 14 toward another side (lower side) in the axial direction α. The outer housing can 15 is a negative electrode terminal. The negative electrode tab 20 is provided, for example, in an inner wound portion (inner peripheral portion) of the electrode assembly 14. The negative electrode tab 20 may be provided in an outer wound portion (outer peripheral portion) of the electrode assembly 14. The negative electrode tab 20 is a band-shaped conductive member. A constituent material of the negative electrode tab is not particularly limited. It is preferable that the negative electrode tab is formed of a metal including nickel or copper as a major component or is formed of a metal including both of nickel and copper. Further, in the negative electrode plate 12, a negative electrode mixture layer is formed on each of a winding inner surface (inner surface in the radial direction) and a winding outer surface (outer surface in the radial direction) of the negative electrode core.

Further, the negative electrode core is exposed on the outermost peripheral surface of the electrode assembly 14 and is in contact with an inner surface of a cylindrical portion 15a of the outer housing can 15 to be electrically connected to the outer housing can 15. Due to the electrical connection between the negative electrode plate 12 and the cylindrical portion 15a of the outer housing can 15, much favorable current collectability can be ensured.

As described above, the electrode assembly 14 has a wound structure where the positive electrode plate 11 and the negative electrode plate 12 are spirally wound with the separator 13 interposed therebetween. All of the positive electrode plate 11, the negative electrode plate 12, and the separator 13 are formed in a band shape, and are spirally wound to be alternately stacked in a radial direction β of the electrode assembly 14. In the electrode assembly 14, an electrode plate longitudinal direction of each of the electrode plates is a winding direction, and an electrode plate width direction of each of the electrode plates is the axial direction α.

In the example illustrated in FIG. 1, a metal battery case that houses the electrode assembly 14 and the non-aqueous electrolyte is configured by the outer housing can 15 and the sealing assembly 16. Insulating plates 17 and 18 are provided above and below the electrode assembly 14, respectively. The positive electrode tab 19 extends toward the sealing assembly 16 through a through hole of the upper insulating plate 17 and is welded to a lower surface of a filter 22 that is a bottom plate of the sealing assembly 16. In the non-aqueous electrolyte secondary battery 10, a cap 26 that is a top plate of the sealing assembly 16 electrically connected to the filter 22 serves as a positive electrode terminal.

The outer housing can 15 has a bottomed columnar shape including an opening, and for example, is a bottomed cylindrical metal container. A gasket 27 is provided between the outer housing can 15 and the sealing assembly 16 to ensure sealability inside the outer housing can 15. The outer housing can 15 includes a groove portion 21 that is formed, for example, by spinning a side surface portion from the outer side toward the inner side in the radial direction. The groove portion 21 is preferably formed in an annular shape along the circumferential direction of the outer housing can 15, and supports the sealing assembly 16 on an upper surface thereof. The sealing assembly 16 seals the opening of the outer housing can 15.

The sealing assembly 16 includes the filter 22, a lower valve member 23, an insulating member 24, an upper valve member 25, and the cap 26 that are stacked in order from the electrode assembly 14 side. Each of the members configuring the sealing assembly 16 has, for example, a disk shape or a ring shape, and the members excluding the insulating member 24 are electrically connected to each other. The lower valve member 23 and the upper valve member 25 are connected to each other at central portions thereof, and the insulating member 24 is interposed between peripheral edge portions of the lower valve member 23 and the upper valve member 25. When an internal pressure of the battery increases due to abnormal heat generation, for example, the lower valve member 23 is broken. As a result, the upper valve member 25 swells to the cap 26 side to be spaced apart from the lower valve member 23 such that electrical connection therebetween is interrupted. When the internal pressure further increases, the upper valve member 25 is broken, and gas is discharged from an opening 26a of the cap 26.

Further, in the present embodiment, with reference to FIG. 2, a first positive electrode plate clearance between a first turn portion N1 of a first turn and a second turn portion N2 of a second turn from a winding-start end 11a of the positive electrode plate 11 toward a winding-end side is represented by L1, a second positive electrode plate clearance between the second turn portion N2 and a third turn portion N3 of a third turn is represented by L2, and a third positive electrode plate clearance between the third turn portion N3 and a fourth turn portion N4 of a fourth turn is represented by L3. At this time, the L1, L2, and L3 satisfy a relationship of L1 > L2 ≥ L3. As a result, as described below, buckling of the positive electrode plate 11 and the negative electrode plate 12 that are the electrode plates in the vicinity of the winding-start end of the electrode assembly 14, and the separator 13 can be suppressed.

The components of the electrode assembly 14 will be described in more detail. The positive electrode plate 11 includes a band-shaped positive electrode core and a positive electrode mixture layer formed on both surfaces of the positive electrode core. As the positive electrode core, for example, foil of a metal such as aluminum or a film where the metal is disposed on the surface layer is used. The preferred positive electrode core is foil of a metal including aluminum or an aluminum alloy as a major component. The thickness of the positive electrode core is, for example, greater than or equal to 10 µm and less than or equal to 30 µm.

It is preferable that the positive electrode mixture layer includes a positive electrode active material, a conductive agent, and a binder. The positive electrode plate 11 is prepared by applying a positive electrode mixture slurry including the positive electrode active material, the conductive agent, the binder, and a solvent such as N-methyl-2-pyrrolidone (NMP) to both surfaces of the positive electrode core and drying and compressing the positive electrode mixture slurry.

Examples of the positive electrode active material include lithium-containing transition metal oxides containing a transition metal element such as Co, Mn, or Ni. The lithium-containing transition metal oxide is not particularly limited and is preferably a composite oxide represented by Formula Li₁₊ₓMO₂ (in the formula, -0.2 < x ≤ 0.2, M includes at least one of Ni, Co, Mn or Al).

Examples of the conductive agent include carbon materials including carbon black (CB) such as acetylene black (AB) or Ketjenblack, graphite, and the like. Examples of the binder include a fluorine-based resin such as polytetrafluoroethylene (PTFE) or polyvinylidene fluoride (PVdF), polyacrylonitrile (PAN), polyimide (PI), an acrylic-based resin, and a polyolefin-based resin. In addition, these resins may be used in combination with carboxymethyl cellulose (CMC) or a salt thereof, polyethylene oxide (PEO), or the like. These resins may be used alone or in combination of two or more kinds thereof.

On a part of the positive electrode plate 11 in the longitudinal direction, an exposed surface where a surface of a metal configuring the positive electrode core is exposed is formed. The exposed surface is a portion connected to the positive electrode tab 19 and is a portion where the surface of the positive electrode core is not covered with the positive electrode mixture layer.

The negative electrode plate 12 includes the band-shaped negative electrode core and the negative electrode mixture layer that is formed on both surfaces of the negative electrode core. As the negative electrode core, for example, foil of a metal such as copper or a film where the metal is disposed on the surface layer is used. The thickness of the negative electrode core is, for example, greater than or equal to 5 µm and less than or equal to 30 µm.

It is preferable that the negative electrode mixture layer includes a negative electrode active material and a binder. The negative electrode plate 12 is prepared, for example, by applying a negative electrode mixture slurry including the negative electrode active material, the binder, and water to both surfaces of the negative electrode core, and then drying and compressing the negative electrode mixture slurry.

The negative electrode active material is not particularly limited as long as capable of reversibly storing and releasing lithium ions. For example, a carbon material such as natural graphite or artificial graphite, a metal such as Si or Sn for forming an alloy with lithium, or an alloy or a composite oxide including the metal can be used. As the binder included in the negative electrode active material layer, for example, the same resins as those of the positive electrode plate 11 are used. When the negative electrode mixture slurry is prepared using an aqueous solvent, styrene-butadiene rubber (SBR), CMC or a salt thereof, polyacrylic acid or a salt thereof, polyvinyl alcohol, or the like can be used. These resins may be used alone or in combination of two or more kinds thereof.

As the separator 13, a porous sheet having ion permeability and insulating properties is used. Specific examples of the porous sheet include microporous membranes, woven fabrics, nonwoven fabrics, and the like. As a material of the separator 13, an olefin-based resin such as polyethylene or polypropylene is preferable. The thickness of the separator 13 is, for example, greater than or equal to 10 µm and less than or equal to 50 µm. The separator 13 tends to be thinned along with an increase in capacity and output of the battery. The separator 13 has a melting point of, for example, about higher than or equal to 130°C and lower than or equal to 180°C.

To the outermost peripheral surface of the negative electrode core of the negative electrode plate 12 that is the outermost peripheral surface of the electrode assembly 14, a tape (not illustrated) is affixed to fix a winding-end side end of the negative electrode plate 12.

Further, regarding the first positive electrode plate clearance L1, the second positive electrode plate clearance L2, and the third positive electrode plate clearance L3 of the first turn, the second turn, and the third turn from the winding-start end 11a of the positive electrode plate 11 toward the winding-end side, the L1, L2, and L3 satisfy a relationship of L1 > L2 ≥ L3.

In order to restrict the positive electrode plate clearances as described above, the positive electrode plate 11, the negative electrode plate 12, and the separator 13 are wound, for example, using a first winding core. The first winding core is configured such that two first winding core elements having a substantially circular shape in cross-section face each other. Planar portions of the two first winding core elements are combined to face each other such that a cylindrical object is formed.

When the electrode assembly 14 is wound, in a state where the negative electrode plate 12 is interposed between the two separators 13, in the two separators 13, portions extending from a winding-start end 12a of the negative electrode plate 12 toward the winding-start side are interposed between the two first winding core elements. Also, the two separators 13 and the negative electrode plate 12 are spirally wound around the outside of the first winding core configured with the two first winding core elements, the positive electrode plate 11 is inserted between the separators 13 during the winding, and the stack is wound. As a result, the densely wound electrode assembly intermediate element is formed. After forming the electrode assembly intermediate element, the first winding core element is removed from a central portion of the electrode assembly intermediate element in the axial direction.

After removing the first winding core, a second winding core configured with two second winding core elements is inserted into the central portion of the electrode assembly intermediate element, and winding-start ends of the two separators are interposed between the two second winding core elements. At this time, the second winding core elements are used such that the diameter of the cylindrical second winding core formed by combining the two second winding cores is less than the diameter of the first winding core.

Also, in a state where the outermost peripheral portion of the electrode assembly intermediate element is fixed not to rotate, by rotating the second winding core in the forward direction that is the same direction as the winding direction of the electrode assembly intermediate element, the wound state of the portion in the vicinity of the winding-start end of the electrode assembly intermediate element is loosened, and thus the clearance between the electrode plates increases. At this time, by restricting the diameter of the second winding core and the rotation speed of the second winding core, the electrode assembly 14 where the positive electrode plate clearances satisfy the above-described relationship of L1 > L2 ≥ L3 is formed.

By restricting the positive electrode plate clearances to L1 > L2 ≥ L3, the electrode plate clearance gradually increases toward the winding-start turn portion in the vicinity of the winding-start end of the electrode assembly 14. Therefore, when the electrode assembly 14 expands and contracts during charging/discharging of the battery, even though the movement amounts of the electrode plates and the separator increase in the vicinity of the winding-start end of the electrode assembly 14, application of an excessive pressure to this portion can be prevented. Accordingly, buckling of the positive electrode plate 11, the negative electrode plate 12, and the separator 13 in the vicinity of the winding-start end of the electrode assembly 14 can be suppressed.

Further, it is preferable that the positive electrode plate clearances are restricted to L1 > L2 > L3. With this preferable configuration, the second positive electrode plate clearance L2 is greater than the third positive electrode plate clearance L3 in the vicinity of the winding-start end of the electrode assembly 14, and thus the electrode plate clearance more increases toward the winding-start end. As a result, as in a schematic diagram illustrated in FIG. 3, buckling of the electrode plate in the vicinity of the winding-start end of the electrode assembly 14 can be further suppressed. FIG. 3 is a schematic diagram illustrating a cross-section of the electrode assembly 14 after repeating a predetermined number of charging/discharging cycles, in which the separator is not illustrated and the number of winding turns of the electrode assembly 14 is reduced as compared to the actual number of winding turns.

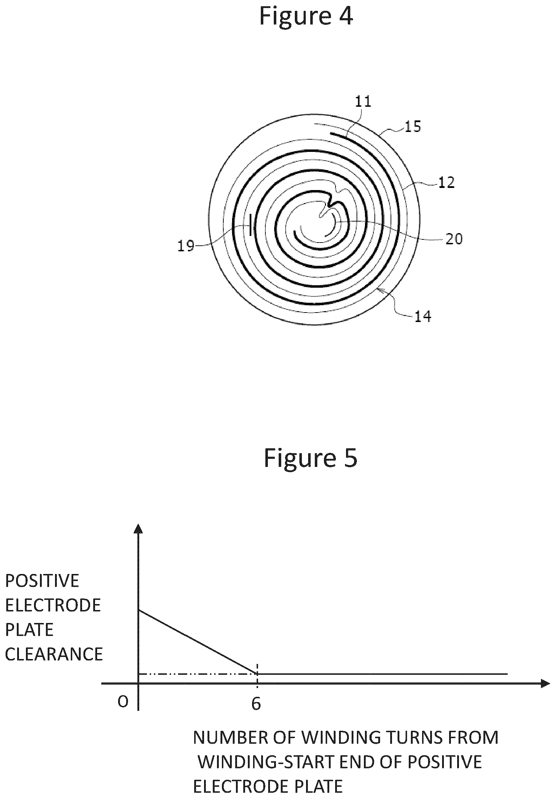

On the other hand, a secondary battery according to Comparative Example can be considered, in which unlike the embodiment, the winding of the portion in the vicinity of the winding-start end of the electrode assembly 14 is not loosened and the positive electrode plate clearances L1, L2, and L3 match with each other. In Comparative Example, for example, when the number of winding turns is large, after repeating a predetermined number of charging/discharging cycles, buckling is likely to occur in the positive electrode plate 11 and the negative electrode plate 12 in the vicinity of the winding-start end of the electrode assembly 14 as illustrated in the example in the schematic diagram of FIG. 4.

Further, in the embodiment, it is preferable that, when an outermost peripheral positive electrode plate clearance between an outermost peripheral turn portion of the positive electrode plate 11 and a turn portion of the positive electrode plate 11 on an inner peripheral side one turn further than the outermost peripheral turn portion is represented by Lx, L2 and Lx satisfy a relationship of 5 × Lx > L2 > Lx. With this preferable configuration, the second positive electrode plate clearance L2 is greater than the outermost peripheral positive electrode plate clearance Lx. Therefore, the electrode plate clearance in the vicinity of the winding-start end of the electrode assembly 14 further increases. As a result, buckling of the positive electrode plate 11 and the negative electrode plate 12 in the vicinity of the winding-start end of the electrode assembly 14 can be further suppressed. Further, an excessive increase in electrode plate clearance in the vicinity of the winding-start end of the electrode assembly 14 can be prevented. Therefore, the turn portions of the electrode plate adjacent to each other in the radial direction of the electrode assembly 14 can be prevented from excessively displacing relatively in the radial direction of the battery and the like. As a result, buckling of the electrode plate in the vicinity of the winding-start end of the electrode assembly 14 can be more effectively suppressed.

### <Example>

The inventors of the present disclosure prepared four secondary batteries in total according to Examples 1 to 3 and Comparative Example 1 and were charged and discharged under predetermined conditions to verify whether buckling of the electrode assembly occurred, and a capacity retention rate as a cycle characteristic.

### EXAMPLES

### [Example 1]

### [Preparation of Positive Electrode Plate]

As a positive electrode active material, aluminum-containing lithium nickel cobalt oxide represented by LiNi_{0.88}Co_{0.09}Al_{0.03}O₂ was used. Next, 100 parts by mass of LiNi_{0.88}Co_{0.09}Al_{0.03}O₂, 1 part by mass of acetylene black, and 0.9 parts by mass of polyvinylidene fluoride (PVDF) (binder) were mixed, and an appropriate amount of a solvent of N-methyl-2-pyrrolidone (NMP) was added to the mixture to prepare a positive electrode mixture slurry. Subsequently, the positive electrode mixture slurry was applied to both surfaces of an elongated positive electrode core formed of aluminum foil having a thickness of 15 µm and was dried using a drying machine at a temperature of higher than or equal to 100°C and lower than or equal to 150°C to remove NMP. After that, the positive electrode mixture slurry that was applied to both surfaces of the positive electrode core and dried was compressed using a roll press machine, and then the compressed stack was cut into a predetermined electrode size to prepare the positive electrode plate 11 where the positive electrode mixture layer was formed on both surfaces of the positive electrode core. At this time, regarding the positive electrode plate 11, the thickness was 0.144 mm, the width was 62.6 mm, and the length was 861 mm. In one end portion of the positive electrode plate 11 in the longitudinal direction, an exposed surface of the core where the mixture layer was not present was formed, and the positive electrode tab 19 formed of aluminum was fixed to the exposed surface by welding.

### [Preparation of Negative Electrode Plate]

As a negative electrode active material, 95 parts by mass of graphite powder and 5 parts by mass of silicon oxide were mixed and used. In addition, 100 parts by mass of the negative electrode active material, a dispersion of 1 part by mass of styrene-butadiene rubber (SBR) as a binder, and 1 part by mass of carboxymethyl cellulose (CMC) as a thickener were mixed. This mixture was dispersed in water to prepare a negative electrode mixture slurry. The negative electrode mixture slurry was applied to both surfaces of an elongated negative electrode core formed of copper foil having a thickness of 8 µm, was dried using a drying machine, and was compressed using a roller of a roll press machine such that a predetermined thickness was obtained. The elongated negative electrode core where the negative electrode mixture layer was formed was cut into a predetermined electrode size to prepare the negative electrode plate 12 where the negative electrode mixture layer was formed on both surfaces of the negative electrode core. At this time, regarding the negative electrode plate 12, the thickness was 0.160 mm, the width was 64.2 mm, and the length was 943 mm. Additionally, in one end portion of the negative electrode plate 12 in the longitudinal direction that was positioned on the winding-end side of the electrode assembly 14, the mixture layer was not present, so that an exposed portion where the core surface was exposed was provided, and the negative electrode tab 20 formed of nickel was fixed and attached to the exposed portion by welding.

### [Preparation of Electrode Assembly]

The prepared positive electrode plate 11 and the prepared negative electrode plate 12 were spirally wound with the separator 13 formed of a polyethylene microporous membrane and interposed therebetween, and the winding-end side end was fixed using a tape to prepare an electrode assembly intermediate element where the number of winding turns was 23. At this time, using a first winding core having a diameter of 4.0 mm, the positive electrode plate 11, the negative electrode plate 12, and the separator 13 were wound, and the first winding core was removed from a central portion of the electrode assembly intermediate element after the winding. Next, to form a clearance within the electrode assembly intermediate element, a second winding core having a diameter of 2.0 mm was inserted into the central portion, and the winding-start ends of the two separators were interposed therebetween. After that, the second winding core rotated in the forward direction with respect to the winding direction of the electrode assembly intermediate element at a rotation speed of 0.5.

Accordingly, it was verified from an image of a cross-section of the electrode assembly obtained using an X-ray CT scanner (X-ray computer tomograph) that the first, second, and third positive electrode plate clearances L1, L2, and L3 satisfied the relationship of L1 > L2 > L3. In addition, at this time, as shown in the field "L2/Lx" of Table 1, it was found that the relationship between the second positive electrode plate clearance L2 and the outermost peripheral positive electrode plate clearance Lx was L2/Lx = 1.5. Each of the positive electrode plate clearances was calculated as the average value of measured values at a plurality of positions across one turn.

**[Table 1]**

| | Clearance Formation | Buckling of Electrode Assembly | Capacity Retention Rate (After 300 Cycles) | L2/Lx |
|---|---|---|---|---|
| Example 1 | Formed | Not Occurred | 80% | 1.5 |
| Example 2 | Formed | Not Occurred | 82% | 2.7 |
| Example 3 | Formed | Not Occurred | 82% | 4.5 |
| Comparative Example 1 | Not Formed | Occurred | 80% | 1.0 |

FIG. 5 is a conceptual diagram illustrating a relationship between the electrode plate clearance of the positive electrode plate 11 and the number of winding turns from the winding-start end in Example 1. As illustrated in FIG. 5, in Example 1, the positive electrode plate clearance gradually decreased toward the winding-end side until the number of winding turns from the winding-start end of the positive electrode plate 11 was 6, and the positive electrode plate clearance between the turn portions of greater than the sixth turn, for example, the positive electrode plate clearance between the turn portion of the seventh turn and the turn portion of the eighth turn was substantially the same as the other positive electrode plate clearances.

### [Preparation of Non-Aqueous Electrolyte]

5 parts by mass of vinylene carbonate (VC) was added to 100 parts by mass of a mixed solvent where ethylene carbonate (EC) and dimethyl carbonate (DMC) were mixed at a volume ratio of EC:DMC = 1:3, and LiPF₆ was dissolved such that the amount thereof 1.5 mol/L. As a result, a non-aqueous electrolyte was prepared.

### [Preparation of Secondary Battery]

The above-described electrode assembly 14 was housed in the bottomed cylindrical outer housing can 15, the insulating plates 17 and 18 were disposed above and below the electrode assembly 14, the negative electrode tab was welded to the bottom portion of the outer housing can 15, the positive electrode tab was welded to the sealing assembly 16, and the electrode assembly 14 was housed in the outer housing can 15. Next, the non-aqueous electrolyte was injected into the outer housing can 15 through a decompression method, and subsequently the sealing assembly 16 was fixed to an opening end portion of the outer housing can 15 by caulking through the gasket 27. As a result, the cylindrical non-aqueous electrolyte secondary battery 10 was prepared. At this time, the capacity of the battery was 4600 mAh.

### [Example 2]

In Example 2, the second winding core rotated in the forward direction with respect to the winding direction of the electrode assembly intermediate element at a rotation speed of 1. In addition, as shown in the field "L2/Lx" of Table 1, it was found from the image of the cross-section of the electrode assembly obtained using the X-ray CT scanner that the relationship between the second positive electrode plate clearance L2 and the outermost peripheral positive electrode plate clearance Lx was L2/Lx = 2.7. In Example 2, the other configurations are the same as those of Example 1.

### [Example 3]

In Example 3, the second winding core rotated in the forward direction with respect to the winding direction of the electrode assembly intermediate element at a rotation speed of 2. In addition, as shown in the field "L2/Lx" of Table 1, it was found from the image of the cross-section of the electrode assembly obtained using the X-ray CT scanner that the relationship between the second positive electrode plate clearance L2 and the outermost peripheral positive electrode plate clearance Lx was L2/Lx = 4.5. In Example 3, the other configurations are the same as those of Example 1.

### [Comparative Example 1]

In Comparative Example 1, the second winding core was not inserted after removing the first winding core from the electrode assembly intermediate element. That is, the rotation of the second winding core was not applied to the electrode assembly intermediate element, and the electrode assembly intermediate element itself was used as the electrode assembly. In addition, as shown in the field "L2/Lx" of Table 1, it was found from the image of the cross-section of the electrode assembly obtained using the X-ray CT scanner that the relationship between the second positive electrode plate clearance L2 and the outermost peripheral positive electrode plate clearance Lx was L2/Lx = 1.0. In Comparative Example 1, the other configurations are the same as those of Example 1.

### [Test Method]

In the test, in an environment of 25°C, each of the above-described non-aqueous electrolyte secondary batteries according to Examples 1 to 3 and Comparative Example 1 was charged at a constant current of 1380 mA (0.3 It) until a battery voltage reached 4.2 V, and then was charged at a constant voltage until a current value at the battery voltage of 4.2 V reached 92 mA. Further, after a rest for 20 minutes, the secondary battery was discharged at a constant discharge current of 2300 mA (0.5 It) as initial discharging. The discharge capacity at this time was defined as an initial discharge capacity. Further, when the charging/discharging cycle was repeated by 300 cycles under this condition, the discharge capacity of the 300th cycle was divided by the initial discharge capacity to calculate a capacity retention rate.

Further, after the test of the 300 cycles, the secondary battery was charged at a constant current of 1380 mA (0.3 It) until a battery voltage reached 4.2 V, and subsequently was charged at a constant voltage until a current value at the battery voltage of 4.2 V reached 92 mA. After that, using an X-ray CT scanner, a cross-section of the central portion of the electrode assembly 14 was observed to check whether buckling occurred in the electrode assembly 14.

### [Test Result]

In the field "buckling of electrode assembly" of Table 1, the check result of buckling is shown. As shown in Table 1, in Examples 1 to 3, the buckling of the electrode assembly was not observed as in the schematic diagram of FIG. 4. On the other hand, in Comparative Example 1, buckling was observed in the vicinity of the winding-start end of the electrode assembly 14. The reason why buckling was not observed in Examples 1 to 3 is presumed to be that the electrode plate clearance in the vicinity of the winding-start end of the electrode assembly 14 increased, a surface pressure in the electrode plate and the separator was able to be suppressed, and thus buckling was able to be prevented. On the other hand, in Comparative Example 1, since the electrode plate clearance in the vicinity of the winding-start end of the electrode assembly 14 was not large, it is presumed that a surface pressure in the electrode plate and the separator was high in the vicinity of the winding-start end, and thus buckling occurred.

In addition, in the field "capacity retention rate" of Table 1, the test result of the capacity retention rate is shown. When the positive electrode plate clearance in the vicinity of the winding-start end of the electrode assembly 14 is large as in Examples 2 and 3, the pressure applied to the separator 13 at this portion was able to be suppressed. Therefore, it is presumed that the crushing of the separator 13 was able to be prevented, nonuniformity of the pressure applied to the electrode plate was able to be improved, and thus the capacity retention rate was able to be improved.

### REFERENCE SIGNS LIST

10 Non-aqueous electrolyte secondary battery
11 Positive electrode plate
11a Winding-start end
12 Negative electrode plate
12a Winding-start end
13 Separator
14 Electrode assembly
15 Outer housing can
15a Cylindrical portion
16 Sealing assembly
17, 18 Insulating plate
19 Positive electrode tab
20 Negative electrode tab
21 Groove portion
22 Filter
23 Lower valve member
24 Insulating member
25 Upper valve member
26 Cap
26a Opening
27 Gasket

## Claims

1. A non-aqueous electrolyte secondary battery comprising:
a wound electrode assembly where a band-shaped positive electrode plate and a band-shaped negative electrode plate are wound with a separator interposed between the positive electrode plate and the negative electrode plate; and
a cylindrical outer housing can that houses the electrode assembly,
wherein when a first positive electrode plate clearance between a first turn portion of a first turn and a second turn portion of a second turn from a winding-start end of the positive electrode plate toward a winding-end side is represented by L1, a second positive electrode plate clearance between the second turn portion and a third turn portion of a third turn is represented by L2, and a third positive electrode plate clearance between the third turn portion and a fourth turn portion of a fourth turn is represented by L3, the L1, L2, and L3 satisfy a relationship of L1 > L2 ≥ L3.

2. The non-aqueous electrolyte secondary battery according to Claim 1,
wherein the L1, L2, and L3 satisfy a relationship of L1 > L2 > L3.

3. The non-aqueous electrolyte secondary battery according to Claim 1 or 2,
wherein when an outermost peripheral positive electrode plate clearance between an outermost peripheral turn portion of the positive electrode plate and a turn portion of the positive electrode plate on an inner peripheral side one turn further than the outermost peripheral turn portion is represented by Lx, L2 and Lx satisfy a relationship of 5 × Lx > L2 > Lx.
